# EUROPEAN PATENT SPECIFICATION

(11) **EP 0 616 158 B1**
(45) Date of publication and mention of the grant of the patent: **21.01.1998**
(21) Application number: 93104447.3
(22) Date of filing: 18.03.1993
(51) Int. Cl.: F16K 31/163

(54) **Fluid-actuated valve actuator, especially for submarine use**
Druckmittelbetätigte Ventilstellvorrichtung insbesondere für unterseeische Verwendung
Commande de soupapes à fluide sous pression notamment pour l'utilisation sous-marine

(43) Date of publication of application: 21.09.1994
(73) Proprietor: DANTORQUE A/S, DK-6715 Esbjerg (DK)
(72) Inventor: Kristensen, Oluf Ostergaard, DK-6800 Varde (DK); Eriksen, Ole Petter, DK-2830 Virum (DK)
(74) Representative: Roerboel, Leif

(56) References cited:
- EP-A- 0 240 810
- WO-A-92/19895
- DE-A- 2 202 111
- DE-B- 1 913 058
- DE-U- 8 507 064
- US-A- 4 968 010

## Description

The present invention relates to a fluid-actuated valve actuator of the kind set forth in the preamble of claim 1.

Valve actuators of this kind are e.g. used for actuating valves in pipelines for gas og oil, in which the valve is required to close or open respectively in case of accidents, especially loss of fluid pressure, said opening or closing in such cases being produced by the force of the dished-spring stack.

In a previously known valve actuator of the kind referred to above, the dished-spring stack is placed coaxially about the relatively long output shaft between the stack and the internal wall of the housing, one end of the stack being supported by the base flange, while the cylinder is closed upwardly by the top cover, and the piston will, when fluid pressure is applied, move the conversion member in the form of a separate component downwardly against the force from the dished-spring stack.

This known valve actuator suffers from several disadvantages, thus:
- it requires a large amount of space in the height direction, which is undesirable for many applications,
- the work of assembling it during manufacture is cumbersome and time-consuming, and
- last but not least: in practice, it has not been proved possible to design it in such a manner, that the force exerted by the dished-spring stack can be converted into a torque of a magnitude sufficient for opening or closing large valves.

It is the object of the present invention to provide a fluid-actuated valve actuator of the kind set forth in the preamble of claim 1, that is compact in construction and especially has a small height, and which is substantially easier to assemble than the previously known valve actuator, and this object is achieved with a valve actuator, according to the present invention characterized by the features set forth in the characterizing clause of claim 1.

With this arrangement, the functional parts of the valve actuator are arranged substantially in the opposite sense relative to the placing of these components in the previously known valve actuator, with the spring stack uppermost and situated by itself in the spring housing and the remaining components of the valve actuator comprised in the base connected to the spring housing. Achieved thereby is
- that the valve actuator is compact in construction,
- that during manufacture, the valve actuator can be assembled with a minimum amount of work, and
- last, but not least, that it is possible to construct the dished-spring stack independently of the remaining components of the valve actuator in such a manner, that it exerts a force on the conversion member sufficient to produce the large torque required.

Preferred embodiments of the valve actuator according to the present invention, the effects of which are explained in the following detailed portion of the present specification, are set forth in claims 2-6.

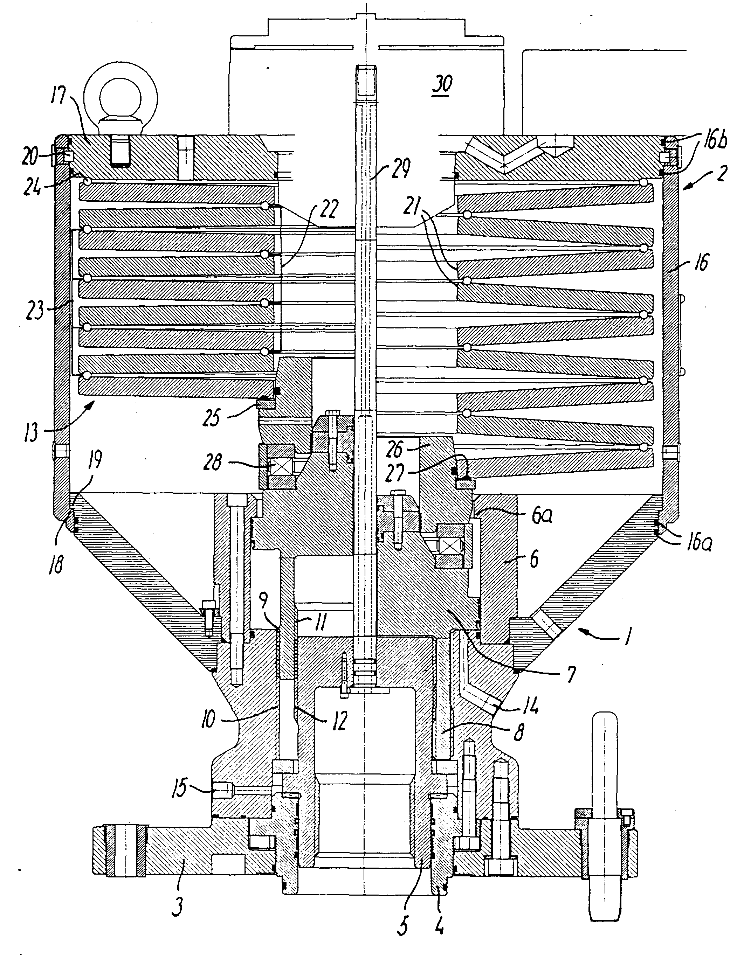

In the following detailed portion of the present specification, the present invention will be explained in more detail with reference to an exemplary embodiment of a valve actuator according to the invention shown in the sole figure of the drawing, the left-hand side of the figure showing the piston in its uppermost position, while the right-hand side of the figure shows the piston in its lowermost position.

The valve actuator shown in the drawing comprises a base generally designated 1 and a spring housing generally designated 2. The base 1 comprises a base flange 3 and a closure collar 4, in which an output shaft 5 is rotatably supported. Further, in the base 1 there is a cylinder 6, in which a piston 7 can move up and down. A tubular conversion member 8 is integral with the piston 7 and extends coaxially downwardly from the latter. On part of its external surface, the conversion member 8 is provided with helical grooves 9 engaging corresponding helical ridges 10 in a central bore in the base 1. On a part of its internal surface, the conversion member 8 has straight splines 11 engaging corresponding splines 12 on a part of the upper peripheral surface of the output shaft 5. Because of the mutual engagement between and the shape and arrangement of the grooves, ridges and splines 9,10 and 11,12, respectively, the piston 7 and the output shaft 5 will, when the piston 7 moves from its lowermost position shown in the right-hand half of the figure to the uppermost position shown in the left-hand half of the figure, rotate in a first direction, while the piston 7 and the output shaft 5 will rotate in an opposite, second direction, when the piston 7 moves from its uppermost to its lowermost position.

An internal stop shoulder 6a in cylinder 6 limits the upward movement of the piston 7.

The upward movement of the piston 7 against the force exerted by a pre-stressed dished-spring stack generally designated 13 within the spring housing 2 is produced by supplying pressurized fluid through fluid connections 14 or 15 to the space in the cylinder 6 below the piston 7 or to the annular space between the central bore in the base 1 and the output shaft 5 below the conversion member 8 protruding downwardly from the piston 7, respectively, while the downward movement of the piston 7 is produced by the force from the dished-spring stack 13 during simultaneous outward flow of fluid through the connections 14 and 15. The pressurized-fluid spaces below the piston 7 and the conversion member 8 are sealed against leakage to the surroundings by means of suitably placed seals.

The spring housing 2, in which the dished-spring stack 13 is situated, consists of a cylindrical shell 16 and a cover 17. On its lowermost edge, the shell 16 has an inwardly protruding shoulder 18, the diameter of which is greater than the diameter of the base flange 3, said shoulder 18 abutting against an outwardly protruding shoulder 19 on the base 1 and being pressed against the latter by the spring force from the dished-spring stack 13. The cover 17 is secured to the shell 16 by means of cylindrical rollers 20 placed in a track formed by oppositely facing grooves in the circular peripheral surface of the cover 17 and the circular internal wall of the shell 16, respectively. The spring housing 2 is sealed against the surroundings by means of seals 16a and 16b.

The dished-spring stack 13 consists of a number of dished springs 21, in the example shown nine in number, mutually guided by means of rollers 22 placed in grooves close to the inner peripheral edge of converging surfaces on adjacent dished springs 21, and by rollers 23 placed in grooves close to the outer peripheral edge of converging surfaces of adjacent dished springs 21.

The uppermost dished spring 21 in the stack 13 abuts against the cover 17 by means of rollers 24 placed in a groove close to the outer peripheral edge of this dished spring 21 in its surface facing the cover 17, the rollers 24 being able to move radially in a circumferential recess in the downwardly facing surface of the cover 17.

Close to its inner peripheral edge, the lowermost dished spring 21 in the stack 13 abuts with its downwardly facing surface against an abutment ring 25 on a spring hub 26.

It will be understood that it is possible to give the spring housing 2 and the dished-spring stack 13 a shape substantially independent of the dimensions of the base 1 together with the associated components of the valve actuator, so that it is possible, within wide limits, e.g. by varying the number of dished springs 21 in the stack 13 as well as their dimensions and other characteristics, to achieve that a desired spring force is exerted on the spring hub 26.

The spring hub 26 transmits the spring force from the dished-spring stack 13 to the piston 7 through an axial-thrust roller bearing 28, the latter permitting the spring force to be transmitted during rotation of the piston 7.

Centrally in the valve actuator, there is an indicator spindle 29, rigidly connected to the output shaft 5, said spindle indicating the angular position of the output shaft 5 by means of an indicator unit 30 of a type known per se.

The valve actuator functions in the following manner: When pressurized fluid is supplied to the fluid connections 14 or 15, the piston 7 is moved upwardly against the force from the dished-spring stack 13 and will, as explained above, rotate the output shaft 5 and a valve spindle (not shown) connected to the latter in one of the possible directions, the angle of rotation and hence the position of the valve being indicated by means of the indicator spindle 29 and the indicator unit 30. When the fluid pressure in the connections 14 and 15 is released, the spring force from the dished-spring stack 13 will move the piston 7 back to the initial position shown to the right in the drawing during simultaneous rotation of the output shaft 5 and the valve spindle connected to it back to their initial position, this position again being indicated by the indicator spindle 29 and the indicator unit 30.

### LIST OF PARTS

- 1.: Base
- 2.: Spring housing
- 3.: Base flange
- 4.: Closure collar
- 5.: Output shaft
- 6.: Cylinder
- 6a.: Stop shoulder
- 7.: Piston
- 8.: Conversion member
- 9.: Helical grooves
- 10.: Helical ridges
- 11.: (Straight) splines
- 12.: (Straight) splines
- 13.: Dished-spring stack
- 14.: Fluid connection
- 15.: Fluid connection
- 16.: Shell
- 16a.: Seal
- 16b.: Seal
- 17.: Cover
- 18.: Shoulder
- 19.: Shoulder
- 20.: Rollers
- 21.: Dished spring
- 22.: Rollers
- 23.: Rollers
- 24.: Rollers
- 25.: Abutment ring
- 26.: Spring hub
- 27.: Half-toric segments
- 28.: Axial(-thrust) roller bearing
- 29.: Indicator spindle
- 30.: Indicator unit

## Claims

1. Fluid-actuated valve actuator, especially for submarine use, and of the kind comprising
a) a housing comprising a base flange (3) and a top cover (17),
b) a piston (7) movable in a fluid cylinder (6) placed in said housing against the force from a pre-stressed dished-spring stack (13),
c) an output shaft (5) in said housing adapted to be connected to a valve spindle, and
d) a tubular conversion member (8) adapted to move together with said piston (7) and, by means of helical grooves (9) and straight splines (11) in engagement with corresponding helical ridges (10) and straight splines (12) in the housing and on the output shaft (5), adapted to convert the reciprocating movement of the piston (7) to a rotational movement of the output shaft (5),
**characterized** in
e) that the dished-spring stack (13) engages the piston (7) on the side of the latter facing away from the output shaft, and
f) that the housing is divided into
f1) a base (1) comprising the cylinder (6), the piston (7) with the conversion member (8), the output shaft (5) and the base flange (3), and
f2) a spring housing (2) accomodating the dished-spring stack (13) and secured to the base (1) without the use of bolts or screws, by mutually engaging portions (18,19) formed on the base (1) and on the spring housing (2).

2. Valve actuator according to claim 1, **characterized** in that the spring force from the dished-spring stack (13) is transmitted to the piston (7) through a spring hub (26), the latter being rotatably placed on the piston.

3. Valve actuator according to claim 1 or 2, **characterized** in that the dished springs (21) in the stack (13) are mutually guided by means of roller elements (22,23) situated in grooves close to the inner and outer periphery, respectively, of the surface on each spring converging towards an adjacent dished spring (21) in the stack.

4. Valve actuator according to claim 1, **characterized** in
a) that the spring housing (2) consists of a cylindrical shell (16) and a cylindrical top cover (17) secured therein,
b) that said top cover (17) is secured to said shell (16) by means of cylindrical rollers (20) placed in a track, partly shaped in the outer periphery of the cover (17), partly in the inner cylindrical wall of the shell (16), and
c) that said shell (16), due to the pre-stressing of the dished-spring stack (13), is held in engagement with the base (1) by said mutually engaging portions (18,19) formed as an outwardly protruding cylindrical shoulder (19) on the base (1) engaging an inwardly protruding cylindrical shoulder (18) on the shell (16).

5. Valve actuator according to claims 2 and 4, **characterized** in
a) that the dished spring (21) situated closest to the top cover (17) abuts against the latter through rollers (24) situated in a groove close to the outer periphery of the spring (21), said rollers abutting in a circumferential recess in the cover (17), and
b) that the dished spring (21) closest to the spring hub (26) close to its inner periphery abuts against a radial surface on said hub (26) through a number of half-toric segments (27) and a hard abutment ring (25).

6. Valve actuator according to any one or any of the claims 1-5, **characterized** in that the movement of the piston (7) is limited by a stop (6a) in the cylinder (6).

## Patentansprüche

1. Druckmittelbetätigte Ventilstellvorrichtung, insbesondere für unterseeische Verwendung, umfassend
a) ein Gehäuse mit einem Basisflansch (3) und einer oberen Abdeckung (17),
b) einen Kolben (7), der in einem in diesem Gehäuse angeordneten Druckmittelzylinder (6) gegen die Kraft eines vorgespannten Schalenfederpakets (13) bewegbar ist
c) einen Ausgangsschaft (5) in diesem Gehäuse, der mit einer Ventilspindel verbunden werden kann, und
d) ein röhrenförmiges Umsetzungsglied (8), das sich mit dem genannten Kolben (7) bewegen kann und mittels spiralförmiger Rille (9) und gerader Nuten (11) im Eingriff mit korrespondierenden spiralförmigen Kanten (10) und geraden Nuten (12) in dem Gehäuse und auf dem Ausgangsschaft (5) die Hin- und Herbewegung des Kolben (7) in eine Drehbewegung des Ausgangsschafts (5) umwandeln kann
**dadurch gekennzeichnet,** daß
e) das Schalenfederpaket (13) mit dem Kolben (7) auf dessen vom Ausgangsschaft weg weisenden Seite in Eingriff steht, und
f) das Gehäuse geteilt ist in
f1) eine Basis (1), die den Zylinder (6), den Kolben (7) mit dem Umsetzungsglied (8), den Ausgangsschaft (5) und den Basisflansch (3) umfaßt, und
f2) ein Federgehäuse (2), das das Schalenfederpaket (13) aufnimmt und mit der Basis (1) ohne Verwendung von Bolzen oder Schrauben durch gegenseitig ineinander greifende Teile (18), (19), die an der Basis (1) und dem Federgehäuse (2) gebildet sind, eingreifen.

2. Ventilstellvorrichtung nach Anspruch 1, **dadurch gekennzeichnet,** daß die Federkraft des Schalenfederpakets (13) auf den Kolben (7) mittels einer Federnarbe (26), die drehbar auf dem Kolben angebracht ist, übertragen wird.

3. Ventilstellvorrichtung nach Anspruch 1 oder 2, **dadurch gekennzeichnet,** daß die Schalenfedern (21) in dem Paket (13) gegeneinander mittels Walzenelementen (22), (23) geführt sind, die in Rillen nahe dem inneren und äußeren Umfang auf der Oberfläche jeder Feder, wo diese sich gegen die nächste Feder (21) des Pakets neigt, gelagert sind.

4. Ventilstellvorrichtung nach Anspruch 1, **dadurch gekennzeichnet,** daß
a) das Federgehäuse (2) aus einem zylindrischen Mantel (16) und einer darin befestigten zylindrischen oberen Abdeckung (17) besteht
b) diese obere Abdeckung (17) mit dem Mantel (16) durch zylindrische Walzen (20) in einer Bahn verbunden ist, die teilweise in dem äußeren Umfang der Abdeckung (17) und teilweise in der inneren zylindrischen Wand des Mantels (16) gebildet ist und
c) dieser Mantel (16) wegen der Vorspannung des Schalenfederpakets (13) mit der Basis (1) durch ineinander eingreifende Teil (18), (19) zusammengehalten wird, die gebildet sind durch eine nach außen vorspringende zylindrische Schulter (19) an der Basis (1), die mit einer nach innen vorspringenden zylindrischen Schulter (18) auf dem Mantel (16) in Eingriff steht.

5. Ventilstellvorrichtung nach Anspruch 2 und 4,
**dadurch gekennzeichnet,** daß
a) die Schalenfeder (21), die der oberen Abdeckung (17) am nächsten ist, an dieser mittels Walzen anliegt, die in einer Rille nahe dem äußeren Umfang der Feder (21) angeordnet sind, wobei die genannten Walzen in einer umfänglichen Aussparung in der Abdeckung (17) anliegen und
b) die Schalenfeder (21), die der Federnabe (26) am nächsten ist, nahe ihrem inneren Umfang an einer radialen Oberfläche dieser Nabe mittels einer Anzahl halbtorischer Segmente (27) und eines harten Anlagerings (25) anliegt.

6. Ventilstellvorrichtung nach irgendeinem oder einem der Ansprüche 1-5, **dadurch gekennzeichnet,** daß die Bewegung des Kolben (7) durch einen Anschlag (6a) im Zylinder (6) begrenzt ist.

## Revendications

1. Commande de valves hydraulique, notamment destinée à une utilisation sous-marine, et du type qui comprend :
a) un carter comprenant une collerette de base (3) et un couvercle supérieur (17),
b) un piston (7) pouvant se déplacer dans un cylindre (6) placé dans ledit carter, contre la force exercée par une pile de ressorts coniques précontrainte (13),
c) un arbre de sortie (5) dans ledit carter, conçu pour être relié à un axe de valve, et
d) un organe de conversion tubulaire (8), conçu pour se déplacer en même temps que ledit piston (7), et au moyen de gorges hélicoïdales (9) et de cannelures rectilignes (11) entrant en prise avec des nervures hélicoïdales (10) et des cannelures rectilignes (12) correspondantes, aménagées dans le carter et sur l'arbre de sortie (5), conçu pour convertir le déplacement alternatif du piston (7) en un mouvement rotationnel de l'arbre de sortie (5),
caractérisé en ce que
e) la pile de ressorts coniques (13) entre en prise avec le piston (7), sur le côté de ce dernier qui n'est pas en regard de l'arbre de sortie, et
f) le carter est divisé en
f1) une base (1) comprenant le cylindre (6), le piston (7) avec l'organe de conversion (8), l'arbre de sortie (5) et la collerette de base (3), et
f2) un carter de ressorts (2) logeant une pile de ressorts coniques (13) et qui est assujetti à la base (1) sans utilisation de boulons ou de vis, par des portions d'engagement mutuel (18, 19) formées sur la base (1) et sur le carter de ressorts (2).

2. Commande de valves selon la revendication 1, caractérisé en ce que la force de ressort exercée par la pile de ressorts coniques (13) est transmise au piston (7) par l'intermédiaire d'un moyeu de ressort (26), ce dernier étant monté tournant sur le piston.

3. Commande de valves selon la revendication 1 ou 2, caractérisé en ce que les ressorts coniques (21) de la pile (13) sont guidés les uns par rapport aux autres au moyen d'éléments de rouleaux (22, 23) disposés dans des gorges proches respectivement de la périphérie intérieure et de la périphérie extérieure et aménagées sur la surface de chaque ressorts convergeant vers un ressort coniques (21) contigu, de la pile.

4. Commande de valves selon la revendication 1, caractérisé en ce que
a) le carter de ressorts (2) consiste en une coquille cylindrique (16) et un couvercle supérieur cylindrique (17) assujetti à l'intérieur de celle-ci,
b) ledit couvercle supérieur (17) est assujetti à la coquille (16) au moyen de rouleaux cylindrique (20) disposés dans une empreinte, formée partiellement dans la périphérie extérieure du couvercle (17) et partiellement dans la paroi cylindrique intérieure de la coquille (16), et
c) ladite coquille (16), en raison de la précontrainte de la pile de ressorts coniques (13), est maintenue en prise avec la base (1) par des portions d'engagement mutuel (18, 19), se présentant sous la forme d'un épaulement cylindrique extérieur (19) aménagé sur la base (1) qui entre en prise avec un épaulement cylindrique intérieur (18) aménagé sur la coquille (16).

5. Commande de valves selon les revendications 2 et 4, caractérisé en ce que
a) le ressort conique (21) se trouvant le plus près du couvercle supérieur (17) vient buter contre ce dernier par l'intermédiaire de rouleaux (24) disposés dans une gorge proche de la périphérie extérieure du ressort (21), lesdits rouleaux venant buter dans un évidement circulaire du couvercle (17), et
b) le ressort conique (21) se trouvant le plus près du moyeu de ressorts (26), à proximité de sa périphérie intérieure, vient buter contre une surface radiale dudit moyeu (26), par l'intermédiaire d'un certain nombre de segments demi-toriques (27) et d'une bague de butée rigide (25) .

6. Commande de valves selon l'une quelconque des revendications 1 à 5, caractérisé en ce que le déplacement du piston (7) est limité par une butée (6a) aménagée dans le cylindre (6).
